# EUROPEAN PATENT APPLICATION

(11) **EP 3 460 701 A1**
(43) Date of publication of application: **27.03.2019**
(21) Application number: 16906290.8
(22) Date of filing: 23.06.2016
(51) Int. Cl.: G06F 21/55

(54) **INTRUSION DETECTION DEVICE AND INTRUSION DETECTION PROGRAM**

(71) Applicant: Mitsubishi Electric Corporation, Chiyoda-ku Tokyo 100-8310 (JP)
(72) Inventor: SHIMIZU, Koichi, Tokyo 100-8310 (JP); YAMAGUCHI, Teruyoshi, Tokyo 100-8310 (JP); NAKAI, Tsunato, Tokyo 100-8310 (JP); KOBAYASHI, Nobuhiro, Tokyo 100-8310 (JP)
(74) Representative: Pfenning, Meinig & Partner mbB
(86) International application number: PCT/JP2016/068666
(87) International publication number: WO 2017/221373

(57) **Abstract**

A state management unit (210) identifies a state of an operational system, and determines presence or absence of a state transition of the operational system based on the identified state. In a case where there has been a state transition of the operational system, the state management unit determines, with use of a state transition scenario indicating a transition pattern of state transition, whether the state transition of the operational system matches the transition pattern indicated in the state transition scenario. If the state transition of the operational system does not match the transition pattern, an alert output unit (293) outputs an alert. If the state transition of the operational system matches the transition pattern, a whitelist management unit (220) switches whitelists, and an intrusion detection unit (230) performs whitelist-type intrusion detection.

## Description

### Technical Field

The present invention relates to whitelist-type intrusion detection.

### Background Art

Recently, cyberattacks against industrial control systems have been increasing, in relation to which countermeasures are being requested. As a technique to prevent a cyberattack originating from a network, a whitelist-type intrusion detection technique is known. This technique is a technique of previously defining packets to be accepted in a list which is called a whitelist and detecting a packet that is not defined in the whitelist as an attack.

In industrial control systems, as compared with a general information system, the operation form thereof is fixed and packets to be transmitted and received are also fixed. Therefore, in industrial control systems, it is assumed to be possible to previously define packets to be accepted in a whitelist, and there are growing expectations for the whitelist-type intrusion detection technique as a cyberattack countermeasure.

While the accuracy of ingress detection in the whitelist-type intrusion detection depends on the definition of a whitelist, generally, defining a whitelist is not easy.

Accordingly, a technique concerning defining of a whitelist is requested. In particular, in industrial control systems, a technique for correctly performing detection of a characteristic periodic packet is requested.

Patent Literature 1 discloses a technique of, when a timeout time has been exceeded since the previous reception of a periodic packet that matches a search rule, disabling the search rule. In this way, determining timeout of a periodic packet enables determining that a reception time period for the periodic packet has ended.

Non Patent Literature 1 proposes a technique of detecting a complicated attack by switching whitelists according to the operational state of a system.

For example, it can be assumed that a communication for writing a program in a controller is performed only at the time of maintenance of the system and is not performed during the operation of the system. Accordingly, switching whitelists in such a manner that the communication for program writing is enabled at the time of maintenance state and is not enabled at the time of operation state makes it possible to finely control a packet to be accepted and to detect a complicated attack.

Using this technique to change a periodic packet to be accepted according to the operational state of the system enables determining the start and end of reception of the periodic packet.

In systems the operation form of which is fixed, such as industrial control systems, it is necessary to not only determine whether to accept a received packet but also confirm that a packet to be received has been certainly received.

However, the technique described in Patent Literature 1 is able to determine that a packet is continuously being received but is not able to make a detailed determination of when the reception of the packet is started and when the reception of the packet is ended. Moreover, the technique is not able to make a rigorous determination in time periods before and after the time of start or the time of end of the reception of a packet.

In systems the operation of which is fixed, such as industrial control systems, a state transition pattern thereof is also fixed, so that it is assumed that an arbitrary state transition does not occur.

However, in the technique described in Non Patent Literature 1, since any given state transition defined in a state transition diagram is allowed, it is not determined whether a state transition pattern configured with a plurality of times of state transitions matches a state transition pattern that should occur according to the operation of the system.

### Citation List

### Patent Literature

Patent Literature 1: International Publication No. WO 2011/096127

### Non Patent Literature

Non Patent Literature 1: Teruyoshi Yamaguchi, et al., "Survey and Discussion of Intrusion Detection Method for Industrial Control System", SCIS 2015, 2A4-3, in 2015

### Summary of Invention

### Technical Problem

The present invention is directed to enabling detecting an incorrect state transition.

### Solution to Problem

An intrusion detection apparatus according to the present invention includes:
a state identifying unit to identify a state of an operational system;
a state transition determination unit to determine presence or absence of a state transition of the operational system based on the identified state; and
a transition pattern determination unit to, in a case where there has been a state transition of the operational system, determine, with use of a state transition scenario indicating a transition pattern of state transition, whether the state transition of the operational system matches the transition pattern indicated in the state transition scenario.

### Advantageous Effects of Invention

According to the present invention, it becomes possible to detect an incorrect state transition.

### Brief Description of Drawings

Fig. 1 is a configuration diagram of an operational system 100 in an embodiment 1.
Fig. 2 is a configuration diagram of an intrusion detection apparatus 200 in the embodiment 1.
Fig. 3 is a configuration diagram of a state management unit 210 in the embodiment 1.
Fig. 4 is a configuration diagram of a storage unit 291 in the embodiment 1.
Fig. 5 is a configuration diagram of a state transition scenario 320 in the embodiment 1.
Fig. 6 is a state transition diagram 330 in the embodiment 1.
Fig. 7 is a flowchart of an intrusion detection method in the embodiment 1.
Fig. 8 is a diagram illustrating another configuration of the operational system 100 in the embodiment 1.
Fig. 9 is a configuration diagram of an intrusion detection apparatus 200 in an embodiment 2.
Fig. 10 is a configuration diagram of a state management unit 210 in the embodiment 2.
Fig. 11 is a configuration diagram of a periodic communication determination unit 240 in the embodiment 2.
Fig. 12 is a configuration diagram of a storage unit 291 in the embodiment 2.
Fig. 13 is a diagram illustrating whitelists 340 in the embodiment 2.
Fig. 14 is a configuration diagram of an alert condition table 360 in the embodiment 2.
Fig. 15 is a flowchart of an intrusion detection method in the embodiment 2.
Fig. 16 is a flowchart of periodic communication determination processing (S240) in the embodiment 2.
Fig. 17 is a diagram illustrating an example of a periodic communication in the embodiment 2.
Fig. 18 is a configuration diagram of an operational system 100 in an embodiment 3.
Fig. 19 is a configuration diagram of a control network 105 in the embodiment 3.
Fig. 20 is a configuration diagram of a communication period of the control network 105 in the embodiment 3.
Fig. 21 is a diagram illustrating an example of a periodic communication in the embodiment 3.
Fig. 22 is a configuration diagram of a state management unit 210 in the embodiment 3.
Fig. 23 is a configuration diagram of a storage unit 291 in the embodiment 3.
Fig. 24 is a configuration diagram of an alert condition table 370 in the embodiment 3.
Fig. 25 is a flowchart of an intrusion detection method in the embodiment 3.
Fig. 26 is a hardware configuration diagram of an intrusion detection apparatus 200 according to the embodiments.

### Description of Embodiments

In the embodiments and drawings, the same elements or mutually equivalent elements are assigned the respective same reference characters. The description of the elements assigned with the respective same reference characters is omitted or simplified as appropriate.

### Embodiment 1

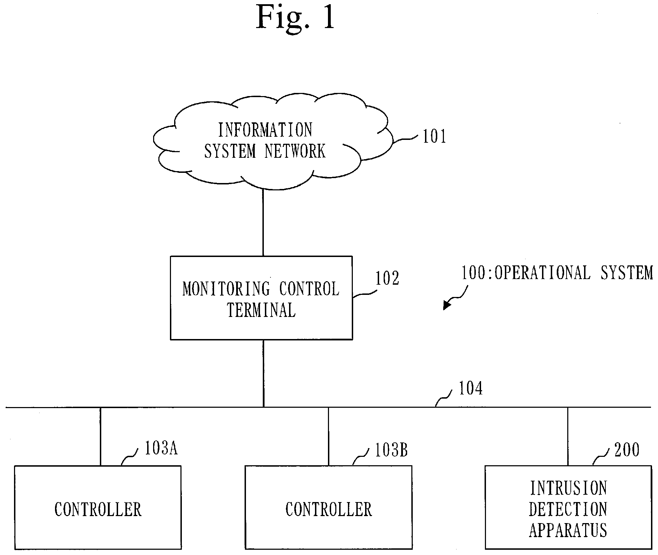

An embodiment for detecting an incorrect state transition is described based on Fig. 1 to Fig. 8.

### --- Description of Configuration ---

A configuration of an operational system 100 is described based on Fig. 1.

The operational system 100 is a system which is targeted for intrusion detection. Specifically, the operational system 100 is an industrial control system. The industrial control system is a system the operation of which is fixed.

The operational system 100 includes a monitoring control terminal 102, a plurality of controllers (103A and 103B), an intrusion detection apparatus 200, and a maintenance network 104. The plurality of controllers is collectively referred to as a "controller 103".

The monitoring control terminal 102, the controller 103, and the intrusion detection apparatus 200 are connected to the maintenance network 104. The maintenance network 104 is a network to which the monitoring control terminal 102, the controller 103, and the intrusion detection apparatus 200 connect.

The monitoring control terminal 102 is further connected to an information system network 101. The information system network 101 is a network to which the monitoring control terminal 102 and, for example, a server connect.

The monitoring control terminal 102 is a computer which controls the operational system 100.

The controller 103 is a computer which controls a device.

The intrusion detection apparatus 200 is a computer which detects an unauthorized access to the operational system 100. The intrusion detection apparatus 200 is post-installed to the maintenance network 104.

The monitoring control terminal 102 collects information from the controller 103, and transmits the collected information to the server via the information system network 101.

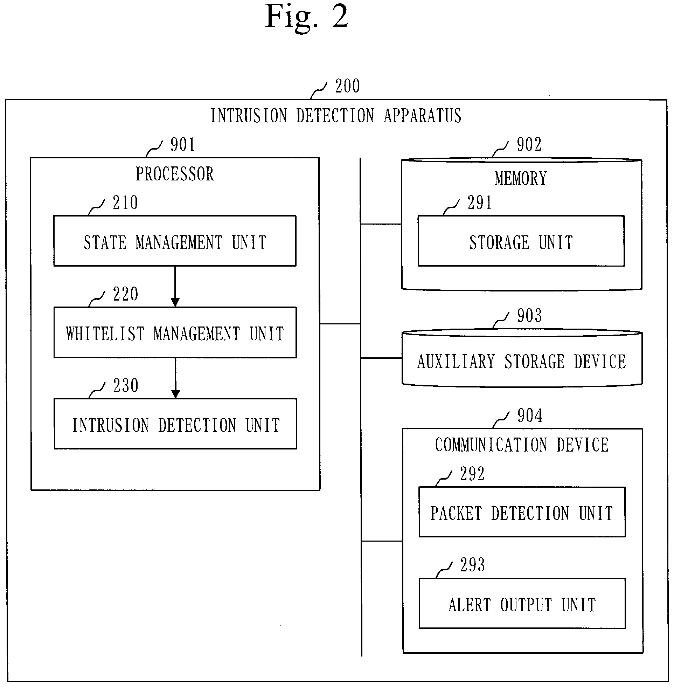

A configuration of the intrusion detection apparatus 200 is described based on Fig. 2.

The intrusion detection apparatus 200 is a computer including pieces of hardware, such as a processor 901, a memory 902, an auxiliary storage device 903, and a communication device 904. These pieces of hardware are connected to each other via signal lines.

The processor 901 is an integrated circuit (IC) which performs processing, and controls other pieces of hardware. Specifically, the processor 901 is a CPU, DSP, or GPU. The CPU is an abbreviation for central processing unit, the DSP is an abbreviation for digital signal processor, and the GPU is an abbreviation for graphics processing unit.

The memory 902 is a volatile storage device. The memory 902 can also be called a main storage device or main memory. Specifically, the memory 902 is a random access memory (RAM).

The auxiliary storage device 903 is a non-volatile storage device. Specifically, the auxiliary storage device 903 is a ROM, HDD, or flash memory. The ROM is an abbreviation for read-only memory, and the HDD is an abbreviation for hard disk drive.

Hardware obtained by integrating the processor 901, the memory 902, and the auxiliary storage device 903 together is referred to as a "processing circuitry".

The communication device 904 is a device which performs communication, and includes a receiver and a transmitter. Specifically, the communication device 904 is a communication chip or a network interface card (NIC).

The intrusion detection apparatus 200 includes, as functional constituent elements, "units" such as a state management unit 210, a whitelist management unit 220, and an intrusion detection unit 230. Functions of the "units" are implemented by software. Functions of the "units" are described below.

The auxiliary storage device 903 stores a program for implementing the functions of "units". The program for implementing the functions of "units" is loaded on the memory 902 and is executed by the processor 901.

Moreover, the auxiliary storage device 903 stores an operating system (OS). At least a part of the OS is loaded on the memory 902 and is executed by the processor 901.

Thus, the processor 901 executes the program for implementing the functions of "units" while executing the OS.

Pieces of data which are obtained by implementing the functions of "units" are stored in a storage device such as the memory 902, the auxiliary storage device 903, a register included in the processor 901, and a cache memory included in the processor 901.

The memory 902 functions as a storage unit 291, in which data that is used, generated, input, output, transmitted, or received by the intrusion detection apparatus 200 is stored. However, another storage device can serve as the storage unit 291.

The communication device 904 functions as a communication unit which communicates data. In the communication device 904, the receiver functions as a receiving unit which receives data and a packet detection unit 292, which is described below, and the transmitter functions as a transmitting unit which transmits data and an alert output unit 293, which is described below.

The intrusion detection apparatus 200 can include a plurality of processors serving as a substitute for the processor 901. The plurality of processors shares execution of the program for implementing the functions of "units".

The program for implementing the functions of "units" can be stored in a computer-readable manner on a non-volatile storage medium, such as a magnetic disc, optical disc, or flash memory. The non-volatile storage medium is a non-transitory tangible medium.

The "unit" can be replaced with "processing" or "stage". The functions of "units" can be implemented by firmware.

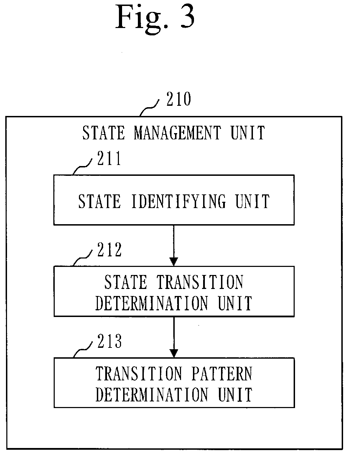

A configuration of the state management unit 210 is described based on Fig. 3.

The state management unit 210 includes, as functional constituent elements, a state identifying unit 211, a state transition determination unit 212, and a transition pattern determination unit 213. The functions of these elements are described below.

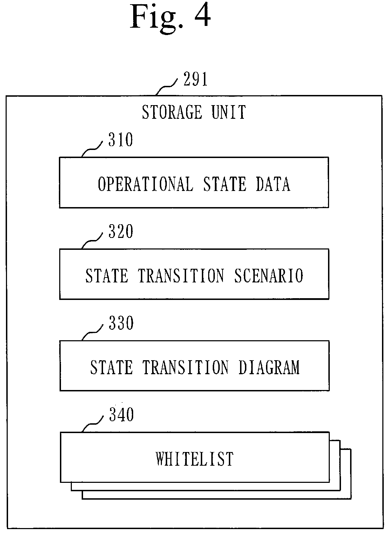

A configuration of the storage unit 291 is described based on Fig. 4.

The storage unit 291 stores, for example, operational state data 310, a state transition scenario 320, a state transition diagram 330, and a plurality of whitelists 340.

The whitelist 340 is a generic term of, for example, whitelist 1, whitelist 2, or whitelist 3, which is described below.

The operational state data 310 represents the state of the operational system 100. The state of the operational system 100 is referred to as an "operational state".

Specifically, the operational state data 310 includes a state number, a sequential order number, and a pattern number.

The state number is a number for identifying the state of the operational system 100.

The sequential order number is a sequential order in which the operational system 100 has entered a state of being identified by the state number in the state transition of the operational system 100.

The pattern number is a number for identifying a transition pattern matching the state transition of the operational system 100.

The state transition scenario 320 represents a pattern of a previously determined state transition. The pattern of the state transition is referred to as a "transition pattern".

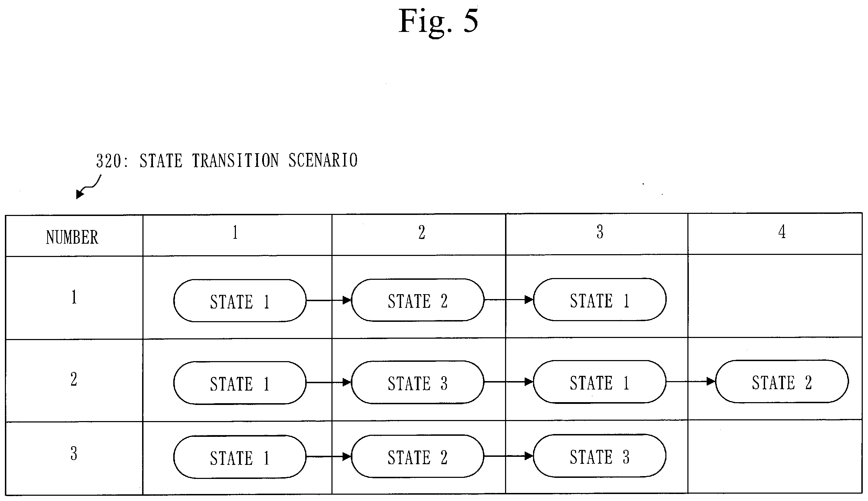

A configuration of the state transition scenario 320 is described based on Fig. 5.

The number in each row is the pattern number, and the number in each column is the sequential order number.

Transition pattern 1 is a transition pattern in which the operational state transitions in the order of state 1, state 2, state 1.

Transition pattern 2 is a transition pattern in which the operational state transitions in the order of state 1, state 3, state 1, state 2.

Transition pattern 3 is a transition pattern in which the operational state transitions in the order of state 1, state 2, state 3.

In a case where the state transition scenario 320 illustrated in Fig. 5 is used, the initial values of the operational state data 310 illustrated in Fig. 4 are as follows.

The initial value of the state number is 1.

The initial value of the sequential order number is 1.

The initial values of the pattern number are 1, 2, and 3.

Referring back to Fig. 4, the state transition diagram 330 and the whitelist 340 are described.

The state transition diagram 330 is data indicating previously determined state transitions, and is data in which the operational state and the whitelist 340 are associated with each other.

The whitelist 340 is data indicating packets which are allowed to be communicated in the operational system 100.

A packet which is communicated in the operational system 100 is referred to as a "communication packet".

A packet which is allowed to be communicated in the operational system 100 is referred to as an "acceptable packet".

A packet which is not allowed to be communicated in the operational system 100 is referred to as an "unacceptable packet".

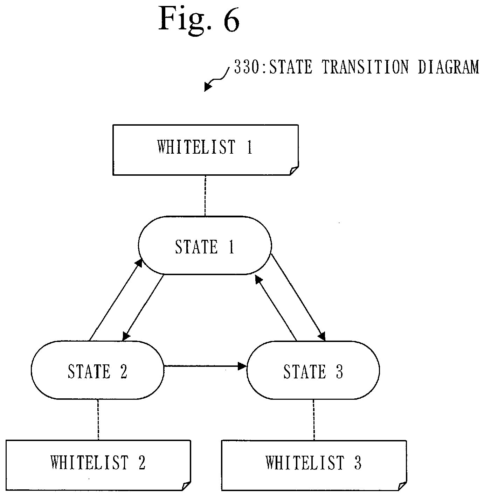

A configuration of the state transition diagram 330 is described based on Fig. 6.

The state transition diagram 330 indicates a transition from state 1 to state 2 or state 3, a transition from state 2 to state 1 or state 3, and a transition from state 3 to state 1.

In the state transition diagram 330, whitelist 1 is associated with state 1, whitelist 2 is associated with state 2, and whitelist 3 is associated with state 3.

### --- Description of Operation ---

The operation of the intrusion detection apparatus 200 is equivalent to an intrusion detection method. Moreover, the procedure of the intrusion detection method is equivalent to the procedure of an intrusion detection program.

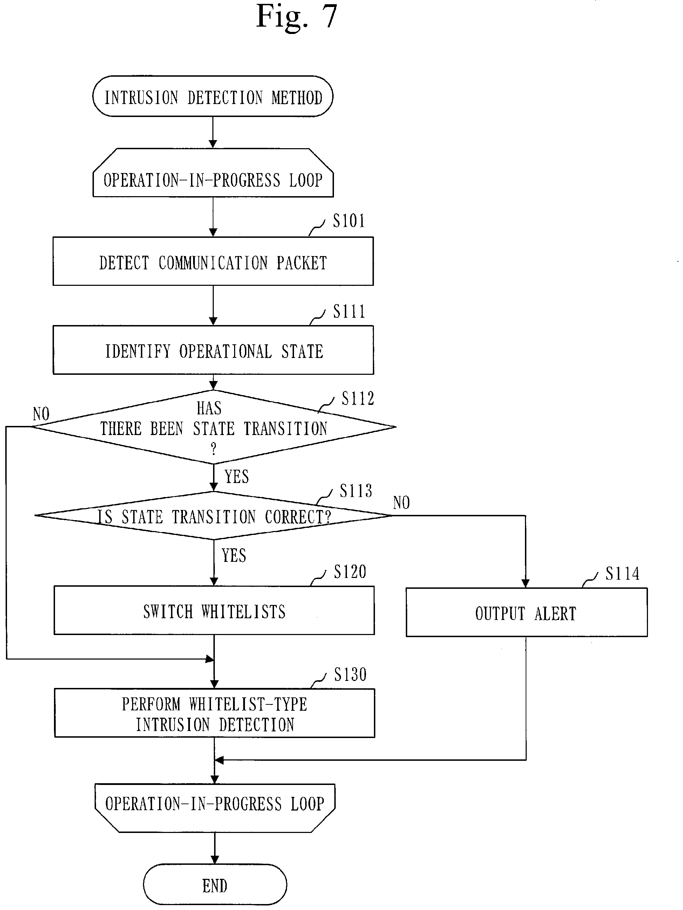

The intrusion detection method is described based on Fig. 7.

Processing in step S101 to step S130 is repeatedly performed as long as the intrusion detection function of the intrusion detection apparatus 200 is in operation.

Step S101 is packet detection processing.

In step S101, the packet detection unit 292 detects a communication packet.

Specifically, the packet detection unit 292 receives a communication packet which flows through the maintenance network 104.

Step S111 is state identifying processing.

In step Sill, the state identifying unit 211 identifies the state of the operational system 100.

Specifically, the state identifying unit 211 analyzes the content of a communication packet detected in step S101. Then, the state identifying unit 211 identifies a state number identifying the state of the operational system 100, based on a result of analysis.

Step S112 is state transition determination processing.

In step S112, the state transition determination unit 212 determines the presence or absence of a state transition of the operational system 100, based on the state identified in step Sill.

Specifically, the state transition determination unit 212 compares the state number identified in step S111 with a state number indicated in the operational state data 310. Then, if the state numbers are different, the state transition determination unit 212 determines that there has been a state transition of the operational system 100.

In a case where there has been a state transition of the operational system 100, the state transition determination unit 212 updates the state number included in the operational state data 310 with the state number identified in step Sill. Moreover, the state transition determination unit 212 adds "1" to the sequential order number included in the operational state data 310. Then, the processing proceeds to step S113.

In a case where there has been no state transition of the operational system 100, the processing proceeds to step S130.

Step S113 is transition pattern determination processing.

In step S113, the transition pattern determination unit 213 determines whether the state transition of the operational system 100 matches a transition pattern indicated in the state transition scenario 320.

Specifically, the transition pattern determination unit 213 makes a determination as follows.

The transition pattern determination unit 213 performs the following operations (1) to (4) for every pattern number included in the operational state data 310.
(1) The transition pattern determination unit 213 selects, from the state transition scenario 320, a transition pattern identified by the pattern number.
(2) The transition pattern determination unit 213 acquires, from the selected transition pattern, a state number corresponding to the sequential order number indicated in the operational state data 310.
(3) The transition pattern determination unit 213 compares the acquired state number with the state number indicated in the operational state data 310.
(4) If the state numbers do not match each other, the transition pattern determination unit 213 deletes the pattern number from the operational state data 310.

In a case where at least one of the pattern numbers has remained in the operational state data 310, the transition pattern determination unit 213 determines that the state transition of the operational system 100 matches a transition pattern indicated in the state transition scenario 320.

In a case where the state transition of the operational system 100 matches a transition pattern indicated in the state transition scenario 320, the state transition of the operational system 100 is correct.

If the state transition of the operational system 100 is correct, the processing proceeds to step S120.

If the state transition of the operational system 100 is not correct, the processing proceeds to step S114.

Step S113 is specifically described based on the state transition scenario 320 illustrated in Fig. 5.

First, suppose that the first operational state is state 1. In the state transition scenario 320, the transition pattern in which the operational state of sequential order number 1 is state 1 includes transition pattern 1, transition pattern 2, and transition pattern 3. Therefore, pattern number 1, pattern number 2, and pattern number 3 are registered with the operational state data 310.

Next, suppose that the operational state has transitioned to state 2. Among transition patterns 1 to 3, the transition pattern in which the operational state of sequential order number 2 is state 2 includes transition pattern 1 and transition pattern 3. Transition pattern 2 is not applicable. Therefore, pattern number 2 is deleted from the operational state data 310.

In this way, the pattern number of a transition pattern which does not match the state transition of the operational system 100 is deleted from the operational state data 310, so that transition patterns which match the state transition of the operational system 100 are narrowed down.

In a case where, in a given sequential order, any transition pattern which matches the state transition of the operational system 100 has become absent, the state transition of the operational system 100 is incorrect.

Referring back to Fig. 7, the description proceeds, starting with step S114. Step S114 is alert output processing.

In step S 114, the alert output unit 293 outputs an alert. This alert is a message for informing that an incorrect state transition has occurred.

Specifically, the transition pattern determination unit 213 generates a notification packet containing an alert, and the alert output unit 293 transmits the notification packet to the monitoring control terminal 102.

After step S114, the processing proceeds to step S101.

Step S120 is whitelist management processing.

In step S120, the whitelist management unit 220 switches the whitelist 340 for use in intrusion detection processing (S130) to a whitelist 340 corresponding to the state of the operational system 100.

Specifically, the whitelist management unit 220 selects, from a plurality of whitelists 340, a whitelist 340 associated with the state of the operational system 100 with use of the state transition diagram 330. The selected whitelists 340 is used in intrusion detection processing (S130), which is performed later.

In the state transition diagram 330 illustrated in Fig. 6, in a case where the state of the operational system 100 is state 2, the whitelist 340 to be selected is whitelist 2.

Step S130 is intrusion detection processing.

In step S130, the intrusion detection unit 230 performs whitelist-type intrusion detection.

Specifically, the intrusion detection unit 230 performs whitelist-type intrusion detection as follows.

First, the intrusion detection unit 230 acquires information about, for example, a transmission source address and a destination address from the communication packet detected in step S101.

Next, the intrusion detection unit 230 determines whether the communication packet detected in step S101 is an acceptable packet indicated in the whitelist 340, based on the acquired information.

If the communication packet is not an acceptable packet, the intrusion detection unit 230 generates a notification packet containing an alert. This alert is a message for informing that an unacceptable packet has been detected. Then, the alert output unit 293 transmits the notification packet to the monitoring control terminal 102.

After step S130, the processing proceeds to step S101.

### --- Advantageous Effects of Embodiment 1 --

It becomes possible to detect an incorrect state transition.

Specifically, in the operational system 100 whose operation form is fixed as in industrial control systems, using the state transition scenario 320 where transition patterns which are accepted in the operational system 100 have been registered, an effect can be attained that a communication pattern which should be accepted can be determined more accurately.

In the state transition diagram 330 illustrated in Fig. 6, a state transition in which state 1 and state 2 are alternately repeated is a correct state transition.

On the other hand, in the state transition scenario 320 illustrated in Fig. 5, the state transition in which state 1 and state 2 are alternately repeated is not defined in any transition pattern and is, therefore, an incorrect state transition.

Thus, detecting an incorrect state transition with use of the state transition scenario 320 enables detecting an incorrect state transition which would not be able to be detected with use of the state transition diagram 330.

### --- Other Configurations ---

The intrusion detection apparatus 200 can be incorporated in a device which is connected to the maintenance network 104.

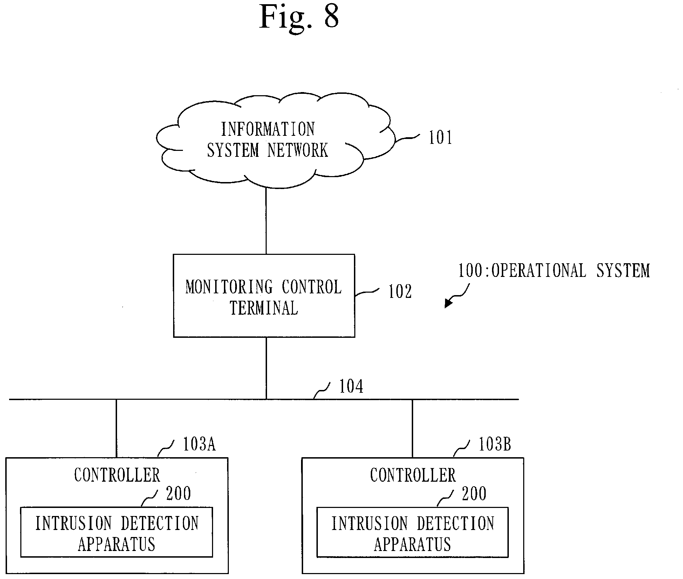

As illustrated in Fig. 8, the intrusion detection apparatus 200 can be incorporated in each controller 103.

The intrusion detection apparatus 200 can be equipped with an input device for receiving an input and a display for displaying, for example, an image. A specific input device includes a keyboard and a mouse.

Transition patterns indicated in the state transition scenario 320 can be a single or a plurality of patterns, or can be added, changed, or deleted.

The state identifying unit 211 can identify the state of the operational system 100 according to a method other than that of analyzing the content of a communication packet.

Specifically, the state identifying unit 211 can inquire of the monitoring control terminal 102 about the state of the operational system 100.

The state transition diagram 330 can be replaced with another form of data as long as it is data in which an operational state and a whitelist are associated with each other.

Specifically, data in a table form in which an operational state and a whitelist are associated with each other can be used instead of the state transition diagram 330.

The alert can be output according to a method other than that of transmitting a notification packet containing an alert.

Specifically, the alert can be displayed on a display or can be output as sound.

### Embodiment 2

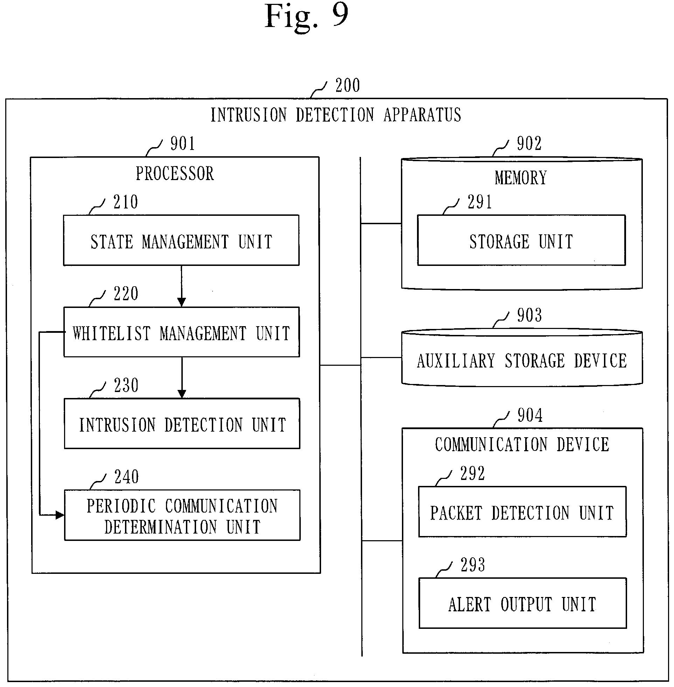

With regard to an embodiment for detecting an incorrect periodic communication, differences from the embodiment 1 are mainly described based on Fig. 9 to Fig. 17.

### --- Description of Configuration ---

A configuration of the operational system 100 is the same as in the embodiment 1.

A configuration of the intrusion detection apparatus 200 is described based on Fig. 9.

The intrusion detection apparatus 200 includes, as functional constituent elements, a state management unit 210, a whitelist management unit 220, an intrusion detection unit 230, and a periodic communication determination unit 240.

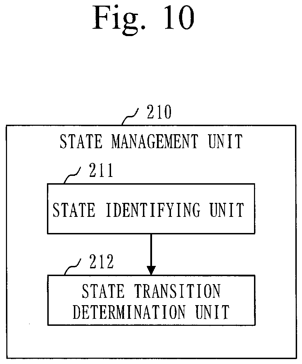

A configuration of the state management unit 210 is described based on Fig. 10.

The state management unit 210 includes, as functional constituent elements, a state identifying unit 211 and a state transition determination unit 212.

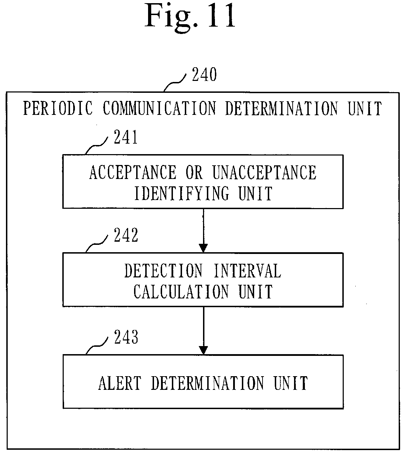

A configuration of the periodic communication determination unit 240 is described based on Fig. 11.

The periodic communication determination unit 240 includes, as functional constituent elements, an acceptance or unacceptance identifying unit 241, a detection interval calculation unit 242, and an alert determination unit 243.

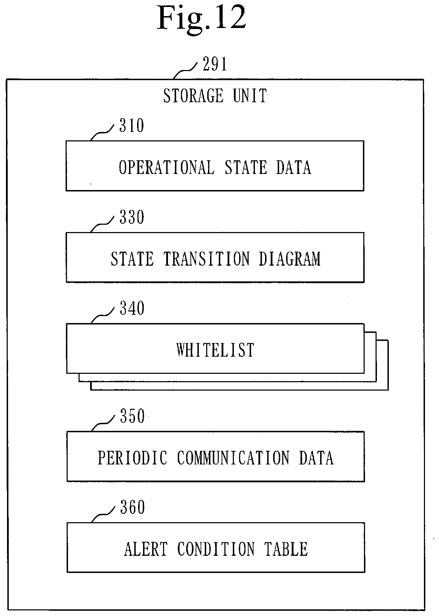

A configuration of the storage unit 291 is described based on Fig. 12.

The storage unit 291 stores, for example, operational state data 310, a state transition diagram 330, a plurality of whitelists 340, periodic communication data 350, and an alert condition table 360.

The operational state data 310 includes a state number and transition time of day.

The state number is as described in the embodiment 1.

The transition time of day is time of day at which the state of the operational system 100 transitioned to the state identified by the state number.

The state transition diagram 330 is as described in the embodiment 1.

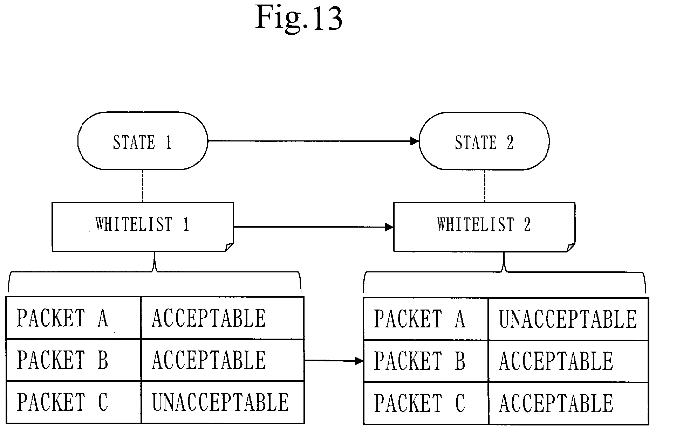

Specific examples of whitelist 1 and whitelist 2 are described based on Fig. 13.

Whitelist 1 is a whitelist 340 associated with state 1.

In whitelist 1, packet A and packet B are acceptable packets, and packet C is an unacceptable packet.

Whitelist 2 is a whitelist 340 associated with state 2.

In whitelist 2, packet B and packet C are acceptable packets, and packet A is an unacceptable packet.

Thus, in a case where the state of the operational system 100 has transitioned from state 1 to state 2, the packet A which has been an acceptable packet becomes an unacceptable packet, and the packet C which has been an unacceptable packet becomes an acceptable packet.

Referring back to Fig. 12, the periodic communication data 350 is described.

The periodic communication data 350 indicates the communication situation of a periodic packet.

The periodic packet is a communication packet which is periodically communicated. The periodic packet is communicated for each communication period. In a case where the communication period is one minute, the periodic packet is communicated at intervals of one minute.

Specifically, the periodic communication data 350 includes a communication period and previous time of day for each type of periodic packet. The previous time of day is time of day at which a periodic packet was detected last time. The initial value of the previous time of day is a value indicating being undetected.

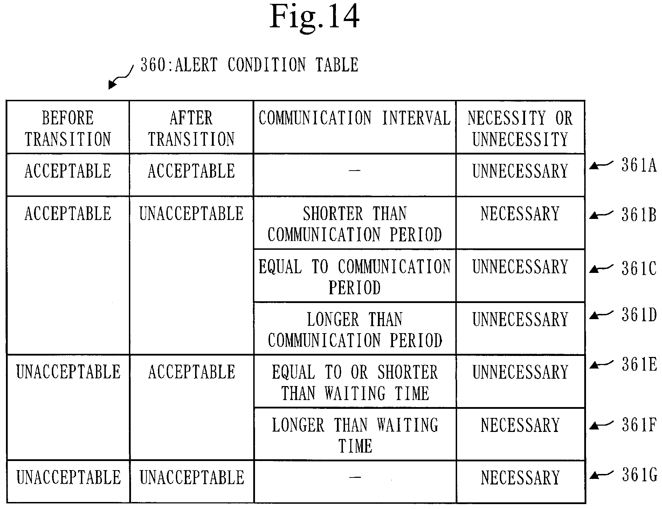

A configuration of the alert condition table 360 is described based on Fig. 14.

The alert condition table 360 includes alert condition records (361A to 361G). The alert condition record 361A to alert condition record 361G are collectively referred to as an "alert condition record 361".

In the alert condition record 361, acceptance or unacceptance before state transition, acceptance or unacceptance after state transition, communication interval, and necessity or unnecessity of an alert are associated with each other.

In the column of communication interval, a hyphen indicates that there is no condition for the communication interval.

### --- Description of Operation ---

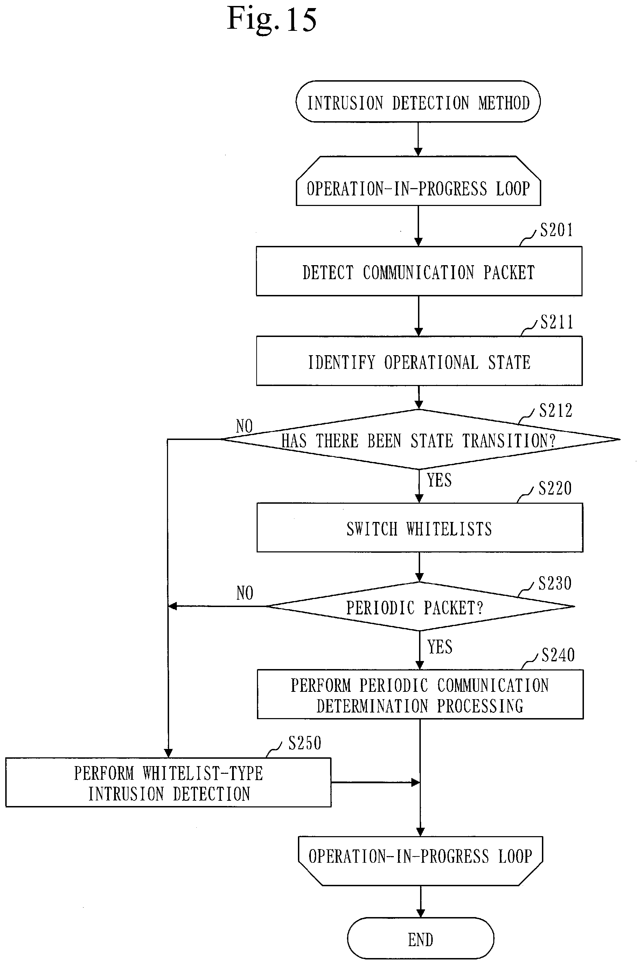

The intrusion detection method is described based on Fig. 15.

Processing in step S201 to step S250 is repeatedly performed as long as the intrusion detection function of the intrusion detection apparatus 200 is in operation.

Step S201 to step S212 are the same as step S101 to S112 illustrated in Fig. 7 in the embodiment 1.

In a case where there has been a state transition of the operational system 100, the state transition determination unit 212 updates the state number included in the operational state data 310 with the state number identified in step S211. Moreover, the state transition determination unit 212 updates the transition time of day included in the operational state data 310. Specifically, the state transition determination unit 212 updates the transition time of day with the current time or the time of day at which the communication packet was detected in step S201. Then, the processing proceeds to step S220.

If there has been no state transition of the operational system 100, the processing proceeds to step S250.

Step S220 is the same as step S120 illustrated in Fig. 7 in the embodiment 1.

After step S220, the processing proceeds to step S230.

In step S230, the periodic communication determination unit 240 determines whether the communication packet detected in step S201 is a periodic packet.

Specifically, a period flag, which indicates being a periodic packet, is set in a periodic packet. If the period flag is set in the communication packet detected in step S201, the periodic communication determination unit 240 determines that the communication packet detected in step S201 is a periodic packet.

If the communication packet detected in step S201 is a periodic packet, the processing proceeds to step S240.

If the communication packet detected in step S201 is not a periodic packet, the processing proceeds to step S250.

Step S240 is periodic communication determination processing.

In step S240, the periodic communication determination unit 240 performs periodic communication determination processing.

The periodic communication determination processing (S240) is described below.

After step S240, the processing proceeds to step S201.

Step S250 is the same as step S130 illustrated in Fig. 7 in the embodiment 1.

After step S250, the processing proceeds to step S201.

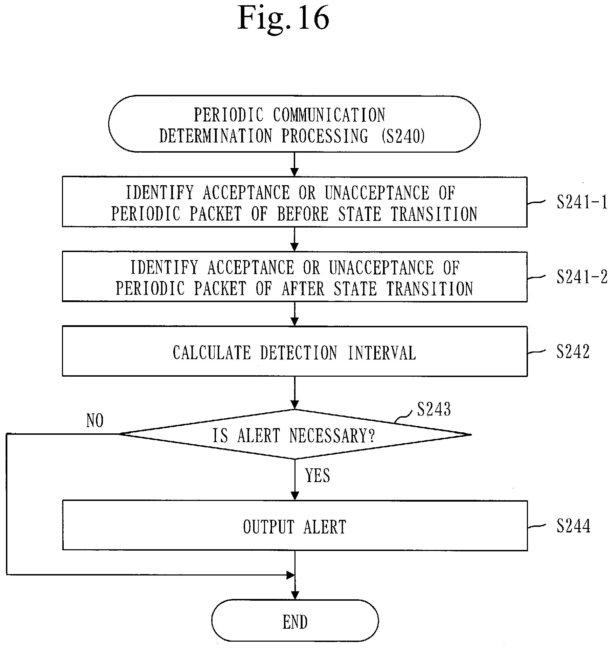

The periodic communication determination processing (S240) is described based on Fig. 16.

Step S241-1 and step S241-2 are acceptance or unacceptance identifying processing.

In step S241-1, the acceptance or unacceptance identifying unit 241 identifies acceptance or unacceptance of a periodic packet of before state transition with use of a whitelist 340 associated with a state of before state transition.

The state of before state transition is the previous state of the operational system 100.

The whitelist 340 associated with a state of before state transition is a whitelist 340 of before being switched in step S220. This whitelist 340 is referred to as a whitelist 340 of before state transition.

The acceptance or unacceptance of a periodic packet of before state transition is acceptance or unacceptance of a periodic packet identified with use of the whitelist 340 of before state transition.

Specifically, the acceptance or unacceptance identifying unit 241 identifies acceptance or unacceptance of the periodic packet in the following way.

First, the acceptance or unacceptance identifying unit 241 acquires information about, for example, a transmission source address and a destination address from the periodic packet detected in step S201.

Then, the acceptance or unacceptance identifying unit 241 determines whether the periodic packet detected in step S201 is an acceptable packet indicated in the whitelist 340, based on the acquired information.

In Fig. 13, in a case where the whitelist 340 of before state transition is whitelist 1 and the detected periodic packet is packet A, the periodic packet of before state transition is an acceptable packet.

In Fig. 13, in a case where the whitelist 340 of before state transition is whitelist 1 and the detected periodic packet is packet C, the periodic packet of before state transition is an unacceptable packet.

Referring back to Fig. 16, step S241-2 is described.

In step S241-2, the acceptance or unacceptance identifying unit 241 identifies acceptance or unacceptance of a periodic packet of after state transition with use of a whitelist 340 associated with a state of after state transition.

The state of after state transition is the current state of the operational system 100.

The whitelist 340 associated with a state of after state transition is a whitelist 340 of after being switched in step S220. This whitelist 340 is referred to as a "whitelist 340 of after state transition".

The acceptance or unacceptance of a periodic packet of after state transition is acceptance or unacceptance of a periodic packet identified with use of the whitelist 340 of after state transition.

The method of identifying acceptance or unacceptance of a periodic packet is the same as in step S241-1.

In Fig. 13, in a case where the whitelist 340 of after state transition is whitelist 2 and the detected periodic packet is packet A, the periodic packet of after state transition is an unacceptable packet.

In Fig. 13, in a case where the whitelist 340 of after state transition is whitelist 2 and the detected periodic packet is packet C, the periodic packet of after state transition is an acceptable packet.

Referring back to Fig. 16, the description proceeds, starting with step S242.

Step S242 is detection interval calculation processing.

In step S242, the detection interval calculation unit 242 calculates a detection interval at which periodic packets have been detected.

The detection interval is a time from the time of day at which the same type of periodic packet as the periodic packet currently detected was detected last time to the time of day at which the periodic packet has been currently detected.

However, in a case where a periodic packet has been detected for the first time, the detection interval calculation unit 242 calculates, as a detection interval, a time which has elapsed from the time of day at which the state of the operational system 100 became the state of when the periodic packet was detected.

Specifically, the periodic communication determination unit 240 calculates a detection interval in the following way.

First, the periodic communication determination unit 240 acquires information about, for example, a transmission source address and a destination address from the periodic packet, and identifies a type of the periodic packet based on the acquired information.

Next, the periodic communication determination unit 240 acquires the previous time of day of the identified type from the periodic communication data 350.

In a case where the acquired previous time of day is not a value indicating being undetected, the periodic communication determination unit 240 calculates a time from the acquired previous time of day to the current time of day. The calculated time is a detection interval. Specifically, the current time of day is current time or the time of day at which a periodic packet was detected in step S201.

In a case where the acquired previous time of day is a value indicating being undetected, the periodic communication determination unit 240 acquires transition time of day from the operational state data 310, and calculates a time from the acquired transition time of day to the current time of day. The calculated time is a detection interval.

Step S243 is alert determination processing.

In step S243, the alert determination unit 243 determines necessity or unnecessity of an alert based on the alert condition table 360, the acceptance or unacceptance of a periodic packet of before state transition, the acceptance or unacceptance of a periodic packet of after state transition, and the detection interval of periodic packets.

Specifically, the alert determination unit 243 determines necessity or unnecessity of an alert in the following way.

First, the alert determination unit 243 selects, from the alert condition table 360, an alert condition record 361 corresponding to the acceptance or unacceptance identified in step S241-1, the acceptance or unacceptance identified in step S241-2, and the detection interval calculated in step S242.

Then, the alert determination unit 243 refers to necessity or unnecessity of an alert included in the selected alert condition record 361.

In a case where the acceptance or unacceptance identified in step S241-1 is acceptance and the acceptance or unacceptance identified in step S241-2 is acceptance, an alert condition record 361A is selected from the alert condition table 360 illustrated in Fig. 14. In this case, an alert is unnecessary.

In a case where the acceptance or unacceptance identified in step S241-1 is acceptance, the acceptance or unacceptance identified in step S241-2 is unacceptance, and the detection interval calculated in step S242 is shorter than the communication period, an alert condition record 361B is selected from the alert condition table 360 illustrated in Fig. 14. In this case, an alert is necessary.

In a case where the acceptance or unacceptance identified in step S241-1 is acceptance, the acceptance or unacceptance identified in step S241-2 is unacceptance, and the detection interval calculated in step S242 is equal to or longer than the communication period, an alert condition record 361C or an alert condition record 361D is selected from the alert condition table 360 illustrated in Fig. 14. In this case, an alert is unnecessary.

The communication period which is compared with the detection interval is a communication period corresponding to the type of the periodic packet among communication periods included in the periodic communication data 350.

In a case where the acceptance or unacceptance identified in step S241-1 is unacceptance, the acceptance or unacceptance identified in step S241-2 is acceptance, and the detection interval calculated in step S242 is equal to or shorter than a waiting time, an alert condition record 361E is selected from the alert condition table 360 illustrated in Fig. 14. In this case, an alert is unnecessary.

In a case where the acceptance or unacceptance identified in step S241-1 is unacceptance, the acceptance or unacceptance identified in step S241-2 is acceptance, and the detection interval calculated in step S242 is longer than the waiting time, an alert condition record 361F is selected from the alert condition table 360 illustrated in Fig. 14. In this case, an alert is necessary.

The waiting time is a predetermined time. The waiting time is shorter than the communication period.

In a case where the acceptance or unacceptance identified in step S241-1 is unacceptance and the acceptance or unacceptance identified in step S241-2 is unacceptance, an alert condition record 361G is selected from the alert condition table 360 illustrated in Fig. 14. In this case, an alert is necessary.

If an alert is necessary, the processing proceeds to step S244.

If an alert is unnecessary, the processing ends.

Step S244 is alert output processing.

In step S244, the alert output unit 293 outputs an alert. This alert is a message for informing that a periodic communication is not being correctly performed.

Specifically, the alert determination unit 243 generates a notification packet including an alert, and the alert output unit 293 transmits the notification packet to the monitoring control terminal 102.

After step S244, the processing ends.

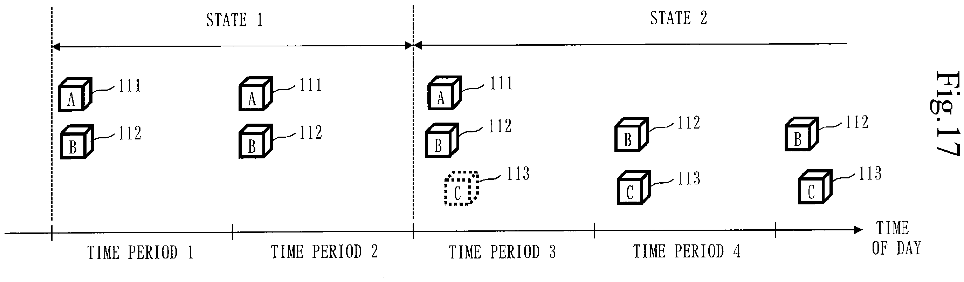

The intrusion detection method is specifically described based on Fig. 17.

A first type of periodic packet is referred to as a "packet A 111", a second type of periodic packet is referred to as a "packet B 112", and a third type of periodic packet is referred to as a "packet C 113". The communication periods of the periodic packets are the same.

Communication time periods separated according to the communication period of the corresponding packet A 111, packet B 112, and packet C 113 are referred to as "time period 1", "time period 2", "time period 3", and "time period 4".

The operational state transitions from state 1 to state 2 between time period 2 and time period 3.

Along with this, the whitelist 340 is switched from whitelist 1 illustrated in Fig. 13 to whitelist 2 illustrated in Fig. 13.

As a result, the packet A 111, which has been accepted in time period 1 and time period 2, becomes not accepted in time period 3 and subsequent time periods. On the other hand, the packet C 113, which has not been accepted in time period 1 and time period 2, becomes accepted in time period 3 and subsequent time periods.

While, as a result of the operational state transitioning to state 2, the packet A 111 becomes not accepted, at the time immediately after state transition, in some cases, it is ambiguous whether the packet A 111 is surely a periodic packet which should not be accepted.

Such cases are previously defined in the alert condition table 360 illustrated in Fig. 14.

In the alert condition table 360 illustrated in Fig. 14, records corresponding to the packet A 111 are the alert condition record 361B to the alert condition record 361D.

As indicated in the alert condition record 361B, in a case where the packet A 111 has been detected at a communication interval shorter than the communication period, an alert is output. In other words, the packet A 111 is not accepted.

As indicated in the alert condition record 361C, in a case where the packet A 111 has been detected at a communication interval equal to the communication period, an alert is not output. In other words, the packet A 111 is accepted.

As indicated in the alert condition record 361D, in a case where the packet A 111 has been detected at a communication interval longer than the communication period, an alert is not output. In other words, the packet A 111 is accepted.

On the other hand, with regard to the packet C 113, which would be accepted after state transition, a communication is required to be started after state transition.

In the alert condition table 360 illustrated in Fig. 14, records corresponding to the packet C 113 are the alert condition record 361E and the alert condition record 361F.

As indicated in the alert condition record 361E, in a case where the packet C 113 has been detected within the waiting time, an alert is not output. In other words, a communication of the packet C 113 has been correctly started.

As indicated in the alert condition record 361F, in a case where the packet C 113 has not been detected within the waiting time, an alert is output. In other words, a communication of the packet C 113 has not been correctly started.

In Fig. 17, since the packet C 113 has not been detected in time period 3, a communication of the packet C 113 has not been correctly started, so that an alert is output.

### --- Advantageous Effects of Embodiment 2 ---

It becomes possible to detect an incorrect periodic communication.

Specifically, with regard to a periodic packet a communication of which is started or ended at a boundary of state transition, a more detailed determination than usual is performed. Therefore, in the operational system 100 the operation form of which is fixed, such as industrial control systems, an advantageous effect of being able to more accurately determine a communication pattern which should be accepted can be attained.

### --- Other Configurations ---

The alert condition table 360 in the embodiment 2 is not limited to the alert condition table 360 illustrated in Fig. 14.

### Embodiment 3

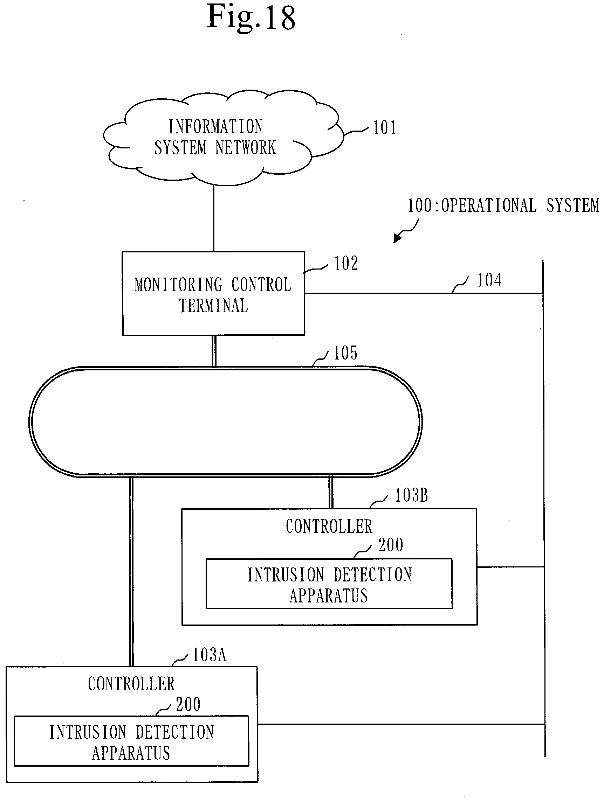

With regard to an embodiment in which a state transition packet is used, differences from the embodiment 1 and the embodiment 2 are mainly described based on Fig. 18 to Fig. 25.

### --- Description of Configuration ---

A configuration of the operational system 100 is described based on Fig. 18.

The operational system 100 includes a control network 105.

The control network 105 is a high-speed and high-reliability network in which a real-time property required for controlling the operational system 100 is ensured.

The monitoring control terminal 102 and the controller 103 are also connected to the control network 105.

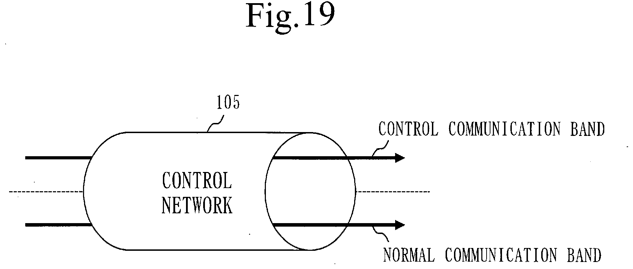

A configuration of the control network 105 is described based on Fig. 19, Fig. 20, and Fig. 21.

In Fig. 19, the control network 105 has a control communication band and a normal communication band.

The control communication band is a communication band for a control packet. The control packet is a communication packet which is communicated so as to control the operational system 100. A periodic packet is included in the control packet. In the control communication band, a real-time property is ensured.

The normal communication band is a communication band for a different packet. The different packet is a communication packet other than the control packet. In the normal communication band, a normal data communication using, for example, TCP/IP is performed. TCP is an abbreviation for Transmission Control Protocol, and IP is an abbreviation for Internet Protocol.

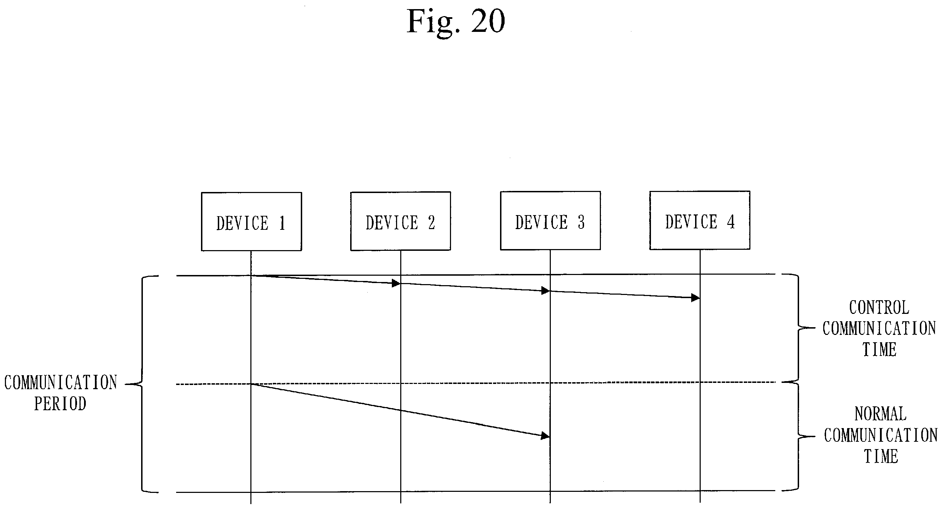

In Fig. 20, the control network 105 has a communication period including a control communication time and a normal communication time.

The control communication time is a communication time for a periodic packet. In the control communication time, a communication which has little jitter and is high in real-time property is performed.

The normal communication time is a communication time for a different packet. In the normal communication time, a normal data communication using, for example, TCP/IP is performed.

Specifically, in a case where the communication period of the control network 105 is 1 millisecond, the control communication time is 0.5 milliseconds in the first half, and the normal communication time is 0.5 milliseconds in the second half.

In the control network 105, a state transition packet is communicated.

The state transition packet is a packet which is communicated when the state of the operational system 100 transitions.

The state transition packet includes a state number indicating the state of the operational system 100 of after state transition.

The state transition packet is communicated in a communication time for a communication packet in a communication time period including the time of day at which the state of the operational system 100 transitions among communication time periods separated according to the communication period.

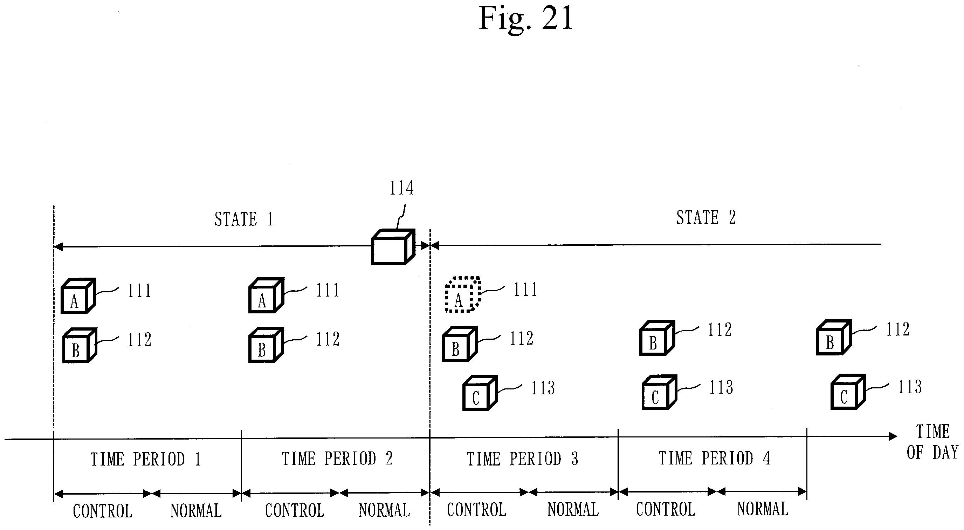

In Fig. 21, a state transition packet 114 is being communicated in the normal communication time of time period 2.

The configuration of the intrusion detection apparatus 200 is the same as that illustrated in Fig. 9 in the embodiment 2.

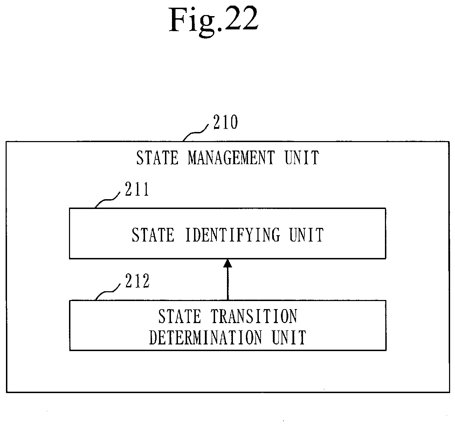

A configuration of the state management unit 210 is described based on Fig. 22.

The state management unit 210 includes, as functional constituent elements, a state identifying unit 211 and a state transition determination unit 212.

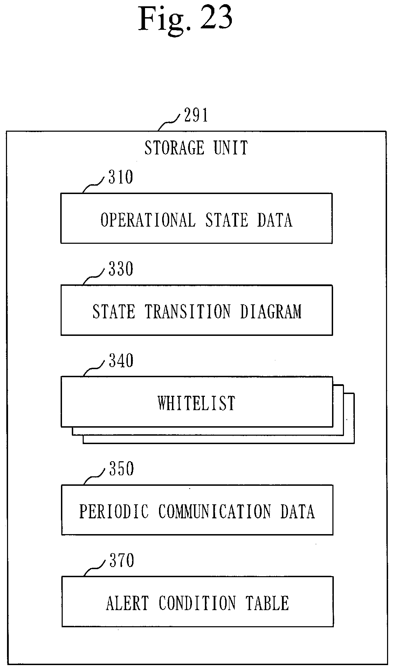

A configuration of the storage unit 291 is described based on Fig. 23.

The storage unit 291 stores, for example, operational state data 310, a state transition diagram 330, a plurality of whitelists 340, periodic communication data 350, and an alert condition table 370.

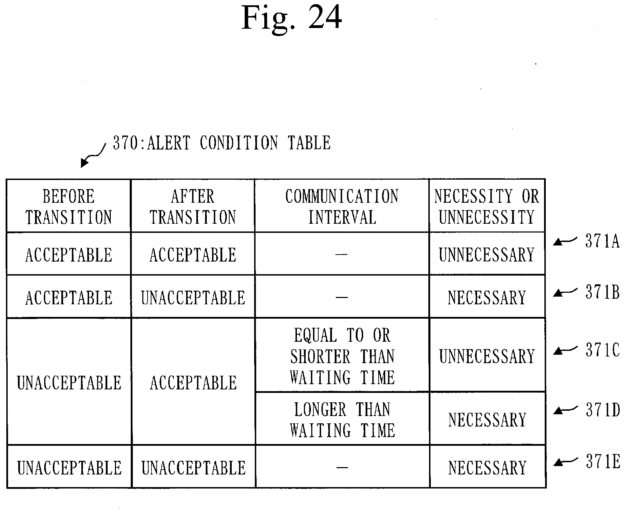

A configuration of the alert condition table 370 is described based on Fig. 24.

The alert condition table 370 includes alert condition records (371A to 371E). The alert condition record 371A to the alert condition record 371E are collectively referred to as an "alert condition record 371".

In the alert condition record 371, acceptance or unacceptance before state transition, acceptance or unacceptance after state transition, communication interval, and necessity or unnecessity of an alert are associated with each other.

In the column of communication interval, a hyphen indicates that there is no condition for the communication interval.

### --- Description of Operation ---

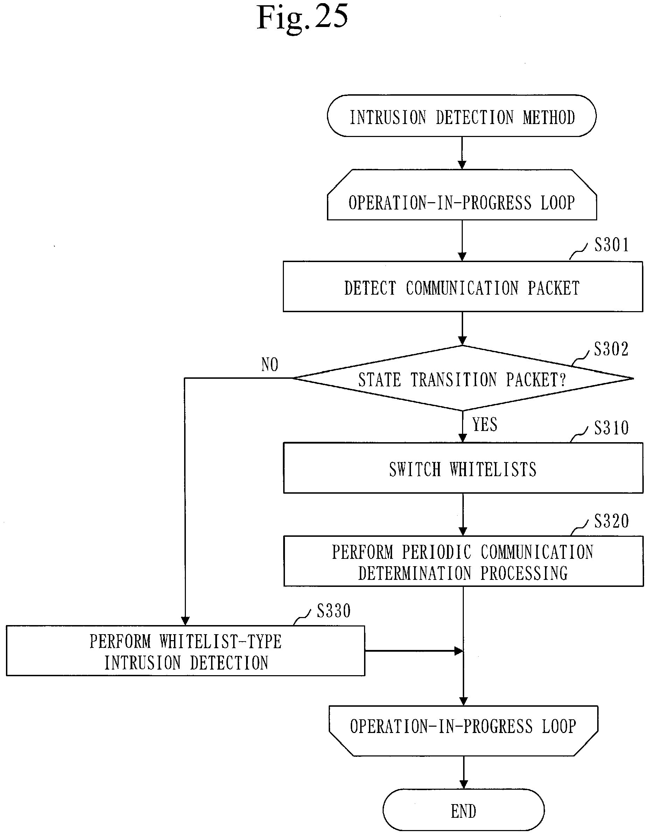

The intrusion detection method is described based on Fig. 25.

Processing in step S301 to step S320 is repeatedly performed as long as the intrusion detection function of the intrusion detection apparatus 200 is in operation.

Step S301 is the same as step S101 illustrated in Fig. 7 in the embodiment 1.

Step S302 is state transition determination processing.

In step S302, the state transition determination unit 212 determines whether the communication packet detected in step S301 is a state transition packet.

Specifically, a state transition flag, which indicates being a state transition packet, is set in a state transition packet. If a state transition flag is set in the communication packet detected in step S301, the state transition determination unit 212 determines that the communication packet detected in step S301 is a state transition packet.

If the communication packet detected in step S301 is a state transition packet, the state identifying unit 211 identifies the state of the operational system 100 of after state transition. Specifically, the state identifying unit 211 acquires the state number from the state transition packet. The state which is identified by the acquired state number is the state of the operational system 100 of after state transition. Then, the processing proceeds to step S310.

If the communication packet detected in step S301 is not a state transition packet, the processing proceeds to step S330.

Step S310 is the same as step S120 illustrated in Fig. 7 in the embodiment 1.

Step S320 is the same as step S240 illustrated in Fig. 15 in the embodiment 2.

Step S330 is the same as step S130 illustrated in Fig. 7 in the embodiment 1.

The intrusion detection method is specifically described based on Fig. 21.

The packet A 111, the packet B 112, and the packet C 113, which are periodic packets, are communicated in the control communication time.

The state transition packet 114 is communicated in the normal communication time of time period 2.

Since it is ensured that the state transition packet 114 is communicated in the normal communication time of time period 2, it is possible to rigorously change acceptance or unacceptance of a periodic packet at a boundary between time period 2 and time period 3.

The operational state transitions from state 1 to state 2 between time period 2 and time period 3.

Along with this, the whitelist 340 is switched from whitelist 1 illustrated in Fig. 13 to whitelist 2 illustrated in Fig. 13.

As a result, the packet A 111, which has been accepted in time period 1 and time period 2, becomes not accepted in time period 3 and subsequent time periods. On the other hand, the packet C 113, which has not been accepted in time period 1 and time period 2, becomes accepted in time period 3 and subsequent time periods.

In the alert condition table 370 illustrated in Fig. 24, a record corresponding to the packet A 111 is the alert condition record 371B.

As indicated in the alert condition record 371B, in a case where the packet A 111 has been detected after the operational state transitions to state 2, an alert is output. In other words, the packet A 111 is not accepted.

In the alert condition table 370 illustrated in Fig. 24, records corresponding to the packet C 113 are the alert condition record 371C and the alert condition record 371D.

As indicated in the alert condition record 371C, in a case where the packet C 113 has been detected within the waiting time, an alert is not output. In other words, a communication of the packet C 113 has been correctly started.

As indicated in the alert condition record 371D, in a case where the packet C 113 has not been detected within the waiting time, an alert is output. In other words, a communication of the packet C 113 has not been correctly started.

### --- Advantageous Effects of Embodiment 3 ---

It becomes possible to detect an incorrect periodic communication.

Specifically, a state transition packet which serves as a cue for state transition is communicated with use of a high-reliability cyclic communication. Therefore, it becomes possible to perform state transition at accurate timing at which a periodic communication starts or ends. Then, in the operational system 100 the operation form of which is fixed, such as industrial control systems, an advantageous effect of being able to more accurately determine a communication pattern which should be accepted can be attained.

### --- Other Configurations ---

In the operational system 100 illustrated in Fig. 18, the intrusion detection apparatus 200 can be provided independently of the controller 103, as in Fig. 1 in the embodiment 1.

In that case, the intrusion detection apparatus 200 is connected to the control network 105 in the operational system 100 illustrated in Fig. 18.

In the intrusion detection method illustrated in Fig. 25, the periodic communication determination processing (S320) can be omitted. In that case, the periodic communication determination unit 240, the operational state data 310, the periodic communication data 350, and the alert condition table 370 are unnecessary.

### --- Supplementary Embodiments ---

In an embodiment, the function of the intrusion detection apparatus 200 can be implemented by hardware.

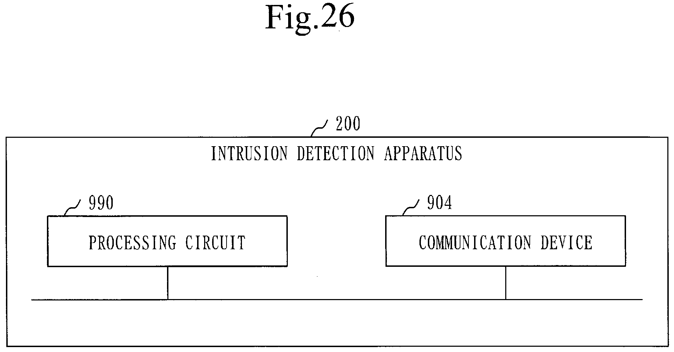

Fig. 26 illustrates a configuration in a case where the function of the intrusion detection apparatus 200 is implemented by hardware.

The intrusion detection apparatus 200 includes a processing circuit 990. The processing circuit 990 can also be called a processing circuitry.

The processing circuit 990 is a dedicated electronic circuit which implements the functions of "units" such as the state management unit 210, the whitelist management unit 220, the intrusion detection unit 230, and the periodic communication determination unit 240.

Specifically, the processing circuit 990 is a single circuit, a composite circuit, a programmed processor, a parallel programmed processor, a logic IC, a GA, an ASIC, an FPGA, or a combination of them. GA is an abbreviation for gate array, ASIC is an abbreviation for application specific integrated circuit, and FPGA is an abbreviation for field programmable gate array.

The intrusion detection apparatus 200 can include a plurality of processing circuits serving as a substitute for the processing circuit 990. The plurality of processing circuits shares the functions of "units".

The function of the intrusion detection apparatus 200 can be implemented by a combination of software and hardware. In other words, some functions of "units" can be implemented by software and the remaining functions of "units" can be implemented by hardware.

The embodiments are examples of desirable configurations, and are not intended to limit the technical scope of the present invention. Each embodiment can be carried out in part, or can be carried out in combination with another embodiment. The procedure described with use of, for example, flowcharts can be altered as appropriate.

### Reference Signs List

100: operational system, 101: information system network, 102: monitoring control terminal, 103: controller, 104: maintenance network, 105: control network, 111: packet A, 112: packet B, 113: packet C, 114: state transition packet, 200: intrusion detection apparatus, 210: state management unit, 211: state identifying unit, 212: state transition determination unit, 213: transition pattern determination unit, 220: whitelist management unit, 230: intrusion detection unit, 240: periodic communication determination unit, 241: acceptance or unacceptance identifying unit, 242: detection interval calculation unit, 243: alert determination unit, 291: storage unit, 292: packet detection unit, 293: alert output unit, 310: operational state data, 320: state transition scenario, 330: state transition diagram, 340: whitelist, 350: periodic communication data, 360: alert condition table, 361: alert condition record, 370: alert condition table, 371: alert condition record, 901: processor, 902: memory, 903: auxiliary storage device, 904: communication device, 990: processing circuit.

## Claims

1. An intrusion detection apparatus comprising:
a state identifying unit to identify a state of an operational system;
a state transition determination unit to determine presence or absence of a state transition of the operational system based on the identified state; and
a transition pattern determination unit to, in a case where there has been a state transition of the operational system, determine, with use of a state transition scenario indicating a transition pattern of state transition, whether the state transition of the operational system matches the transition pattern indicated in the state transition scenario.

2. The intrusion detection apparatus according to claim 1, further comprising an alert output unit to output an alert in a case where the state transition of the operational system does not match the transition pattern.

3. The intrusion detection apparatus according to claim 1 or claim 2, further comprising an intrusion detection unit to perform whitelist-type intrusion detection in a case where the state transition of the operational system matches the transition pattern.

4. The intrusion detection apparatus according to claim 3, further comprising a whitelist management unit to, in a case where the state transition of the operational system matches the transition pattern, select a whitelist associated with the state of the operational system from a plurality of whitelists associated with operational states,
wherein the intrusion detection unit performs whitelist-type intrusion detection with use of the selected whitelist.

5. An intrusion detection program that causes a computer to perform:
state identifying processing to identify a state of an operational system;
state transition determination processing to determine presence or absence of a state transition of the operational system based on the identified state; and
transition pattern determination processing to, in a case where there has been a state transition of the operational system, determine, with use of a state transition scenario indicating a transition pattern of state transition, whether the state transition of the operational system matches the transition pattern indicated in the state transition scenario.

6. An intrusion detection apparatus comprising:
a packet detection unit to detect a periodic packet which is communicated in an operational system;
a detection interval calculation unit to detect a detection interval at which the periodic packet has been detected;
a state identifying unit to identify a state of the operational system;
a state transition determination unit to determine presence or absence of a state transition of the operational system based on the identified state;
a whitelist management unit to select a whitelist associated with the state of the operational system from a plurality of whitelists associated with operational states;
an acceptance or unacceptance identifying unit to, in a case where there has been a state transition of the operational system, identify, with use of a whitelist associated with a state of before state transition and a whitelist associated with a state of after state transition, acceptance or unacceptance of the periodic packet of before state transition and acceptance or unacceptance of the periodic packet of after state transition; and
an alert determination unit to determine necessity or unnecessity of an alert based on an alert condition table in which acceptance or unacceptance before state transition, acceptance or unacceptance after state transition, a communication interval, and necessity or unnecessity of an alert are associated with each other, acceptance or unacceptance of the periodic packet of before state transition, acceptance or unacceptance of the periodic packet of after state transition, and the detection interval of the periodic packet.

7. The intrusion detection apparatus according to claim 6, wherein, in a case where the periodic packet has been first detected, the detection interval calculation unit calculates, as the detection interval, a time elapsing from time of day at which the state of the operational system has become a state in which the periodic packet has been detected.

8. The intrusion detection apparatus according to claim 6 or claim 7, further comprising an intrusion detection unit to perform whitelist-type intrusion detection with use of a whitelist associated with the state of the operational system in a case where there has been no state transition of the operational system.

9. An intrusion detection program that causes a computer to perform:
packet detection processing to detect a periodic packet which is communicated in an operational system;
detection interval calculation processing to detect a detection interval at which the periodic packet has been detected;
state identifying processing to identify a state of the operational system;
state transition determination processing to determine presence or absence of a state transition of the operational system based on the identified state;
whitelist management processing to select a whitelist associated with the state of the operational system from a plurality of whitelists associated with operational states;
acceptance or unacceptance identifying processing to, in a case where there has been a state transition of the operational system, identify, with use of a whitelist associated with a state of before state transition and a whitelist associated with a state of after state transition, acceptance or unacceptance of the periodic packet of before state transition and acceptance or unacceptance of the periodic packet of after state transition; and
alert determination processing to determine necessity or unnecessity of an alert based on an alert condition table in which acceptance or unacceptance before state transition, acceptance or unacceptance after state transition, a communication interval, and necessity or unnecessity of an alert are associated with each other, acceptance or unacceptance of the periodic packet of before state transition, acceptance or unacceptance of the periodic packet of after state transition, and the detection interval of the periodic packet.

10. An intrusion detection apparatus comprising:
a packet detection unit to detect a state transition packet which is communicated when a state of an operational system transitions; and
a whitelist management unit to, in a case where the state transition packet has been detected, select a whitelist associated with a state of after state transition from a plurality of whitelists associated with operational states.

11. The intrusion detection apparatus according to claim 10,
wherein the operational system includes a network having a communication period including a communication time for a periodic packet and a communication time for a different packet, and
wherein the state transition packet is communicated in the communication time for a different packet in a communication time period including time of day at which the state of the operational system transitions among communication time periods separated according to the communication period.

12. The intrusion detection apparatus according to claim 11, wherein the network has a communication band for a periodic packet and a communication band for a different packet.

13. The intrusion detection apparatus according to any one of claim 10 to claim 12,
wherein the packet detection unit detects a periodic packet which is communicated in the operational system,
wherein the intrusion detection apparatus further comprises:
a detection interval calculation unit to calculate a detection interval at which the periodic packet has been detected;
an acceptance or unacceptance identifying unit to, in a case where the state transition packet has been detected, identify, with use of a whitelist associated with a state of before state transition and a whitelist associated with a state of after state transition, acceptance or unacceptance of the periodic packet of before state transition and acceptance or unacceptance of the periodic packet of after state transition; and
an alert determination unit to determine necessity or unnecessity of an alert based on an alert condition table in which acceptance or unacceptance before state transition, acceptance or unacceptance after state transition, a communication interval, and necessity or unnecessity of an alert are associated with each other, acceptance or unacceptance of the periodic packet of before state transition, acceptance or unacceptance of the periodic packet of after state transition, and the detection interval of the periodic packet.

14. An intrusion detection program that causes a computer to perform:
packet detection processing to detect a state transition packet which is communicated when a state of an operational system transitions; and
whitelist management processing to, in a case where the state transition packet has been detected, select a whitelist associated with a state of after state transition from a plurality of whitelists associated with operational states.
